# EUROPÄISCHE PATENTSCHRIFT

(11) **EP 1 025 627 B1**
(45) Veröffentlichungstag und Bekanntmachung des Hinweises auf die Patenterteilung: **06.06.2007**
(21) Anmeldenummer: 99942904.6
(22) Anmeldetag: 23.08.1999
(51) Int. Cl.: H02B 1/052

(54) **INSTALLATIONSGERÄT ZUR MONTAGE AN EINER HUTSCHIENE**
DEVICE FOR MOUNTING ON A TOP-HAT RAIL
DISPOSITIF DE MONTAGE SUR UN PROFILE CHAPEAU

(30) Priorität: 24.08.1998 DE 19838432
(43) Veröffentlichungstag der Anmeldung: 09.08.2000
(73) Patentinhaber: AEG Niederspannungstechnik GmbH & Co. KG, 24534 Neumünster (DE)
(72) Erfinder: SCHLEGEL, Thorsten, D-31848 Bad Münster (DE); KROPP, Dieter, D-31855 Aerzen (DE)
(74) Vertreter: TBK-Patent
(86) Internationale Anmeldenummer: PCT/EP1999/006178
(87) Internationale Veröffentlichungsnummer: WO 2000/011768

(56) Entgegenhaltungen:
- DE-A- 2 337 351
- DE-A- 3 014 499
- DE-A- 4 439 672
- FR-A- 2 715 795
- GB-A- 2 194 679

## Beschreibung

Die vorliegende Erfindung betrifft ein an einer Hutschiene montierbares Installationsgerät gemäß dem Oberbegriff des Anspruchs 1.

Installationsgeräte zur Montage an Hutschienen sind in der Regel Sicherungsautomaten (LS-Schalter) mit standardisierten Montageabschnitten entsprechend der Form der Hutschiene und genormten elektrischen Anschlüssen zur Verwendung für sogenannte Sammelschienen, jedoch mit unterschiedlichen Auslösecharakteristiken und Nennstromstärken.

Aus dem Stand der Technik, beispielsweise der DE 295 05 531 U1 ist ein Installationsgerät dieser Gattung bekannt. Dieses Gerät besteht aus einem im wesentlichen rechteckigen, flach bauenden Gehäuse, an dessen schmaler Vorderseite eine Schaltereinrichtung vorgesehen ist. Die schmale Rückseite ist als Montageabschnitt zur Befestigung des Gehäuses an einer Hutschiene ausgebildet.

Der Montageabschnitt weist eine im wesentlichen ebene, entsprechend der Abmessung der Hutschiene dimensionierte Anlagefläche auf, die an ihrer oberen, schmalen Endkante von einem klauenförmigen Vorsprung begrenzt wird, der als eine über die gesamte Breite der schmalen Gehäuseseite sich erstreckende Halteleiste am Gehäuse einstückig ausgebildet ist. An der im Längsabstand bezüglich des Gehäuses sich ausbildenden unteren Endkante der ebenen Anlagefläche ist die Rückseite des Gehäuses mit einer Führung für einen längs bewegbaren Riegel oder Schieber ausgeformt. Der Riegel weist dabei an seiner zum klauenförmigen Vorsprung zugewandten Oberkante eine in Längsrichtung sich erstreckende Nase auf, welche das Gegenstück des gehäuseseitigen klauenförmigen Vorsprungs darstellt.

Um das bekannte Installationsgerät an der Hutschiene zu montieren, wird der Riegel nach unten, d.h. weg vom klauenförmigen Vorsprung verschoben, soweit, bis der Längsabstand des klauenförmigen Vorsprungs zur Nase größer ist, als die Breite der Hutschiene und somit ein Einsetzen der Hutschiene zwischen den oberen Vorsprung und der Nase erlaubt. Sobald die Anlagefläche des Gehäuses während dessen Montage an der Hutschiene anliegt, wird das Installationsgerät geringfügig nach unten verschoben, so daß der klauenförmigen Vorsprung die Hutschiene hintergreift. Schließlich wird der Riegel nach oben in eine selbst arretierende Rastposition bewegt, in der die Nase ebenfalls die Hutschiene hintergreift und somit das Installationsgerät an der Hutschiene fixiert.

In dem Dokument DE-A-2 337 351 ist ein Installationsgerät zur Montage an einer Hutschiene mit einem Gehäuse offenbart, dessen eine Seite zu einem Montageabschnitt ausgebildet ist, in dem ein verschiebbar am Gehäuse gelagerter Riegel vorgesehen ist, der zumindest einen in Schieberichtung sich erstreckenden Vorsprung hat, der in einer Verspannstellung in hinterschneidenden Eingriff mit der Hutschiene bringbar ist. Das Klemmelement ist derart am Gehäuse gehalten, dass es von dem Riegel bei seiner Verschiebung in die Verspannstellung zumindest teilweise übergreifbar und hierdurch in eine die Hutschiene festklemmende Position bewegbar ist.

Es hat sich nunmehr gezeigt, daß aufgrund der bewegbaren Anordnung des Riegels notwendigerweise ein Spiel zwischen dem Riegel und dem Gehäuse sowie zwischen dem Riegel und der Hutschiene besteht, so daß das Gehäuse auch in der Rastposition des Riegels geringfügig verdreht oder hin- und herbewegt werden kann. Des weiteren werden Kräfte, welche auf das Gehäuse einwirken und von der Hutschiene aufgenommen werden müssen, ggf. auf den Riegel übertragen, wodurch dieser unbeabsichtigt aus seiner Rastposition gedrückt werden kann und sich somit das Installationsgerät von der Hutschiene löst.

Der Erfindung liegt daher die Aufgabe zu Grunde ein Installationsgerät dieser Gattung zu schaffen, welches eine verbesserte Funktionssicherheit bei unverändert einfacher Montierbarkeit aufweist.

Diese Aufgabe wird erfindungsgemäß durch ein Installationsgerät mit den Merkmalen nach Anspruch 1 gelöst.

Die Erfindung besteht demzufolge darin, ein laschenförmiges Klemmelement derart am Gehäuse anzuordnen, daß es vom Riegel bei dessen Verschiebung in die Raststellung, in der ein nasenförmiger Vorsprung des Riegels die Hutschiene hintergreift, zumindest teilweise untergreifbar und hierdurch in eine die Hutschiene festklemmende Position bewegbar ist.

Hierdurch wird das Klemmelement gegen die Hutschiene gedrückt und schließt so den Kraftfluß zwischen dem gehäuseseitigen Montageabschnitt und der Hutschiene quasi unter Umgehung des Riegels. Durch diese Maßnahme werden äußere Kräfte wie Stöße oder Drücke, die ggf. auf das Gehäuse einwirken können, nicht auf den Riegel sondern auf das Klemmelement übertragen, so daß ein unbeabsichtigtes Verschieben des Riegels aus der Rastposition verhindert wird. Darüber hinaus gleicht das Klemmelement Spiel zwischen dem Gehäuse und der Hutschiene aus.

Trotz der zusätzlichen Anordnung des Klemmelements bleibt jedoch die Funktionalität bezüglich der Handhabbarkeit des Installationsgeräts z.B. des LS-Schalters erhalten. In anderen Worten ausgedrückt kann das Installationsgerät durch Betätigen des Riegels von der Hutschiene gelöst und somit das Installationsgerät auch aus einem Verbund an Installationsgeräten einzeln entnommen werden, ohne daß die benachbarten Installationsgeräte von der Hutschiene entfernt werden müssen.

Weitere vorteilhafte Ausgestaltungen der Erfindung sind Gegenstand der Unteransprüche.

Die Erfindung wird nachstehend anhand eines bevorzugten Ausführungsbeispiels unter Bezugnahme auf die begleitenden Zeichnungen näher erläutert.
Fig. 1 zeigt in Perspektivenansicht den Montageabschnitt eines erfindungsgemäßen Installationsgeräts mit einem Riegel in Rast- bzw. Verriegelungsposition,
Fig. 2 zeigt eine Blattfeder als erfindungsgemäße Verdrehsicherung
Fig. 3 zeigt in Perspektivenansicht die Oberseite des efindungsgemäßen Riegels und
Fig. 4 zeigt die konstruktive Zuordnung zwischen dem Riegel und der Blattfeder gemäß der Erfindung.

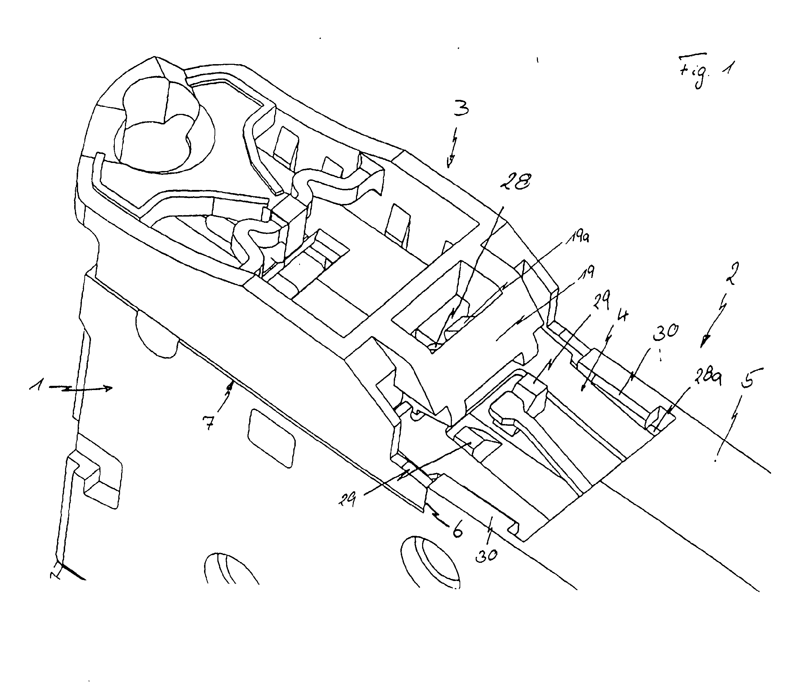

Wie aus der Fig. 1 zu entnehmen ist, ist ein Gehäuse 1 eines Installationsgeräts, vorliegend ein Leitungsschutzschalter oder kurz ein LS-Schalter, mit einem Montageabschnitt 2 zur Befestigung an einer nicht gezeigten Hutschiene ausgebildet, der unter anderem einen am Gehäuse 1 verschiebbar geführten, sowie manuell betätigbaren Arretierriegel 3 umfaßt. Wie nachfolgend noch genauer ausgeführt wird, dient dieser Arretierriegel 3 zur Fixierung des Gehäuses 1 an der Hutschiene. Des weiteren ist ein laschenförmiges Klemmelement 4 in Form einer Blattfeder im Motageabschnitt 2 derart angeordnet, daß dieses bei einer Verschiebung des Riegels 3 in eine Arretier- oder Rastposition gegen die Hutschiene vorgespannt wird, um hierdurch das Gehäuse 1 an der Hutschiene festzuklemmen. Gleichzeitig wird Spiel zwischen der Hutschiene und dem Gehäuse 1 ausgeglichen.

Gemäß der Fig. 1, welche lediglich einen für die Erfindung wesentlichen Bereich des Montageabschnitts 2 in Vergrößerung zeigt, ist das Gehäuse 1 des Installationsgeräts in Form eines flachen sowie länglichen Quaders ausgebildet, wobei sich der Montageabschnitt 2 an einer schmalen und länglichen Rückseite des Gehäuses 1 befindet. Der Montageabschnitt 2 besteht dabei aus einer Anlagefläche 5 (nur bereichsweise dargestellt), die im wesentlichen eben und bezüglich ihrer Abmessungen einer standardisierten Hutschiene (nicht gezeigt) angepaßt ist. An einem, in Längsrichtung des Gehäuses 1 gesehen, oberen Rand der Anlagefläche 5 ist ein in den Fig. 1 bis 4 ebenfalls nicht weiter gezeigter klauenförmiger Vorsprung oder Leiste angeordnet, die vorzugsweise einstückig mit dem Gehäuse 1 ausgeformt ist und eine Art Nut zur Aufnahme einer Oberkante der Hutschiene ausbildet. Dieser letztgenannte Bereich des Montageabschnitts entspricht somit im wesentlich dem eingangs erläuterten Stand der Technik, so daß auf eine weiterführende Beschreibung verzichtet werden kann.

Gemäß der Fig. 1 wird der untere Rand der Anlagefläche 5 begrenzt durch einen Rücksprung oder Absatz 6, wodurch sich ein bezüglich der Anlagefläche 5 zurückgesetzter Führungsabschnitt 7 ergibt. In diesem Abschnitt 7 befindet sich eine Gleit- und Führungseinrichtung in Form von zwei in Längsrichtung des Gehäuses sich erstreckenden parallelen Schienen (nicht gezeigt), welche ebenfalls einstückig mit dem Gehäuse 1 ausgebildet sind. An den Schienen ist der Riegel 3 verschiebbar gelagert, derart, daß er aus einer Verriegelungs- oder Rastpostition (entspricht der in der Fig. 1 gezeigten Position) in eine Freigabeposition bewegbar ist.

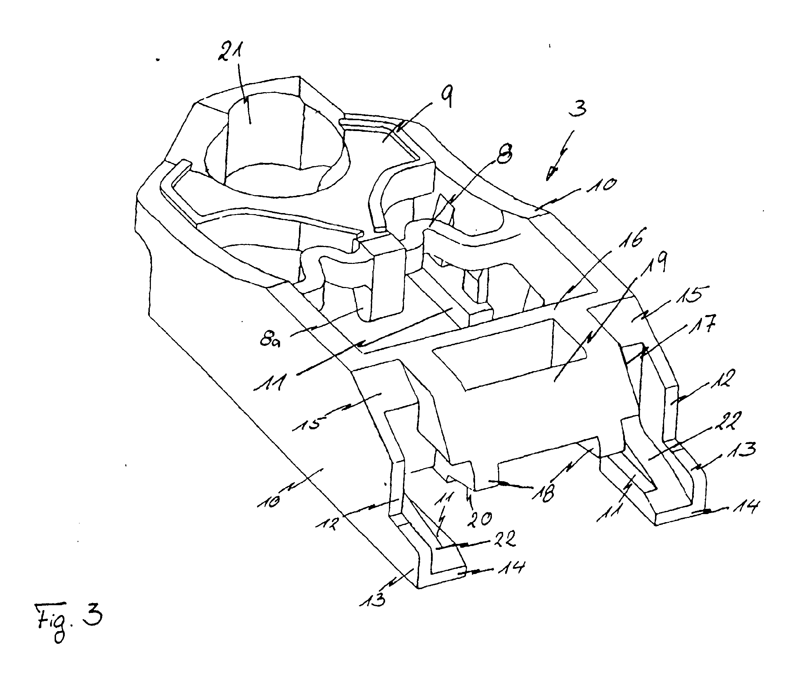

Der Riegel 3 ist in der Fig. 3 im Detail dargestellt.

Gemäß der Fig. 3 hat der Riegel 3 an seiner Oberseite eine gitterartige Struktur mit einer individuell (S-förmig) verlaufenden Strebe 8, welche zwei Flankenwände 10 des Riegels 3 miteinander verbindet und einer im wesentlich dreieckförmigen Platte 9, die sich von einer Hinterseite des Riegels 3 aus längs erstreckt und an ihrer vorderen Spitze mit dem Mittenabschnitt der Strebe 8 verbunden ist. An dieser Spitze bildet die Platte 9 einen im wesentlichen lotrecht nach unten ausgerichteten Rastzapfen 8a aus. Der Rastzapfen 8a ist dabei an seinem freien Ende abgerundet. Der Grund hierfür besteht darin, daß der Rastzapfen 8a beim Verschieben des Riegels 3 entlang der Oberfläche des Gehäuses gleitet, an der zwischen den zwei Schienen eine Art Auswölbung oder Ausbauchung (nicht gezeigt) ausgebildet ist. Beim Übergleiten dieser Auswölbung verschiebt sich der Rastzapfen 8a nach oben, wodurch die Platte 9 sowie die Strebe 8 elastisch verbogen werden. Durch diese elastischen Vorspannung wird eine Kraft über den Zapfen 8a auf den Riegel 3 aufgebracht, die aufgrund der Neigung der Auswölbung eine in Schieberichtung des Riegels 3 wirkende Kraftkomponente hat, welche für ein Vorspannen des Riegels 3 in Rastposition genutzt wird. Gleichzeitig bildet die Auswölbung einen Anschlag, welcher die hintere Freigabeposition definiert.

Die Flankenwände 10 des Riegels 3 sind an ihren jeweiligen Unterkanten begrenzt durch zwei Leisten 11, die an den einander zugewandten Innenseiten der Flankenwände 10 angeordnet sind und zur gleitenden Aufnahme der Schienen dienen.

In Richtung zu einem vorderen Abschnitt des Riegels 3 verjüngen sich die beiden Flankenwände 10 an deren Oberkante keilförmig bzw. fallen jeweils schräg nach unten ab bis jeweils zu einem senkrecht zur Unterkante sich erstreckenden Absatz 12. Die Absätze 12 enden kurz oberhalb der Leisten 11 in jeweils einen Flankenwandfortsatz 13. Die vorderen Stirnseiten der Flankenwandfortsätze 13 bilden jeweils eine Anschlagsfläche 14, welche mit dem gehäuseseitigen Absatz 6 in der Rastposition des Riegels 3 in Anlage kommen, wie dies in der Fig. 1 dargestellt ist. Die Leisten 11 erstrecken sich auch an den Flankenfortsätzen 13 bis zu den Anschlagsflächen 14. Dabei sind die Leisten 13 in ihrem vorderen Endabschnitt in Richtung zu den Anschlagflächen 14 keilförmig abgeschrägt, wobei diese Abschrägung durch eine entsprechend abgeschrägte Einkerbung in den Flankenwandfortsätzen 13 unter Ausbildung einer Art Rampe 22 fortgeführt sind.

In etwa dem Bereich, in welchem die Flankenwände 10 in die keilförmig abfallenden Abschnitte 15 übergehen, ist eine die Flankenwände 10 verbindende steife Querwand 16 angeordnet, an der ein nasenförmiger Arretiervorsprung 17 ausgebildet ist, der sich parallel zu und zwischen den beiden Flankenwandfortsätzen 13 erstreckt. Dieser Vorsprung 17 besteht gemäß der Fig. 3 aus zwei parallel beabstandeten Stegen 18, welche senkrecht zur Querwand 16 von dieser oberhalb der Flankenwandfortsätze 13 abstehen, sowie einer Endplatte 19, welche die freien Endabschnitte der Stege 18 miteinander verbindet und sich ferner in einem stumpfen Winkel bezüglich der Leisten 11 in Richtung zum vorderem Abschnitt des Riegels 3 erstreckt. Die freien Enden der Stege 18 sind dabei mit Eingriffsflächen 20 für die Hutschiene an deren Unterseiten ausgebildet. An der Hinterseite der Querwand 19 sind gemäß der Fig. 1 zwei Noppen 19a einstückig ausgebildet, welche in Freigabeposition des Riegels 3 mit der Auswölbung des Gehäuses 1 in Anlage bringbar sind und somit den Verschiebeweg begrenzen.

An dem hinteren Endabschnitt des Riegels 3 hat dieser ferner eine Betätigungseinrichtung in Form einer Aufnahme oder eines Lochs 21, welches in der Platte 9 ausgebildet ist und zur Aufnahme eines Schlitz- und/oder Kreuzschlitzschraubenziehers dient.

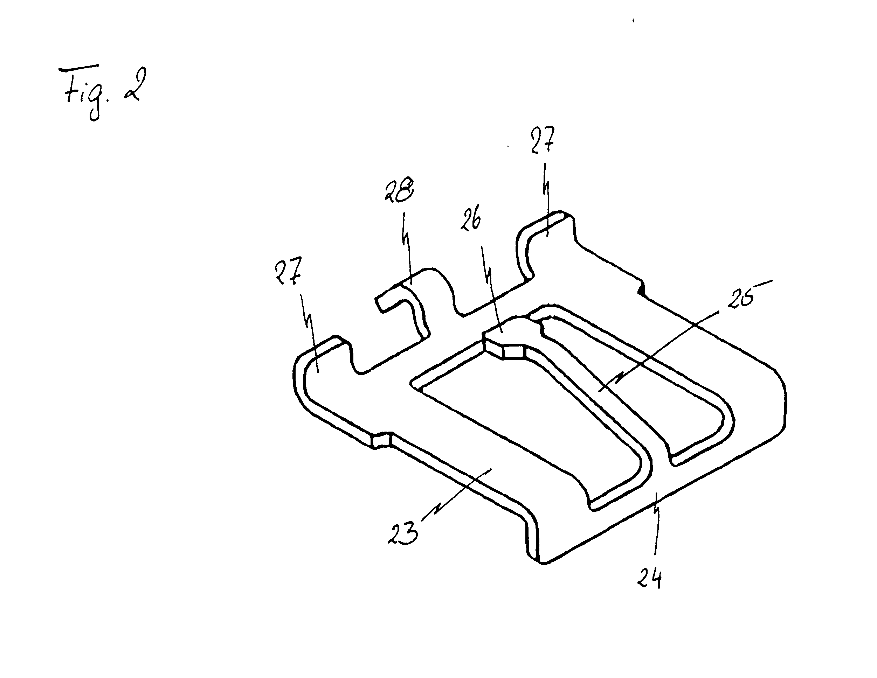

Wie aus der Fig. 2 zu entnehmen ist, bildet die Blattfeder 4 einen flachen sowie geschlossenen Blattfederrahmen 23 von rechteckiger Gestalt. Vorzugsweise läßt sich diese Blattfeder 4 als Stanzteil herstellen. An einer schmalen Seite des Blattfederrahmens 23 ist dieser im wesentlichen rechtwinklig zu einer Halte- oder Befestigungsleiste 24 abgebogen. Von dieser Seite aus erstreckt sich eine Federzunge 25 rechtwinklig in Richtung zu einer gegenüberliegenden Seite des Blattfederrahmens 23, wobei die Federzunge 25 sich unter einem spitzen Winkel von einer vom Blattfederrahmen 23 aufgespannten Ebene in Richtung ihrem freien Ende entfernt. Das freie Ende der Federzunge 25 ist dabei wieder geringfügig abgewinkelt, so daß eine parallel zur Ebene sich ausrichtende Anlage- oder Abstützfläche 26 entsteht.

Die zur Halteleiste 24 gegenüberliegende Seite des Blattfederrahmens 23 ist entgegengesetzt zur Halteleiste 24 im wesentlichen rechtwinklig abgebogen und bildet dabei zwei in Seitenrichtung beabstandete Klemmkanten 27 aus. Zwischen den Klemmkanten 27 ist eine Gleitnase 28 einstückig mit dem Blattfederrahmen 23 vorgesehen. Diese besteht aus einem Stift, der in seinem Mittenabschnitt in Richtung der Klemmkanten 27 (also nach oben) ausgewölbt ist und somit an seiner Oberseite eine abgerundete Abgleitfläche bildet.

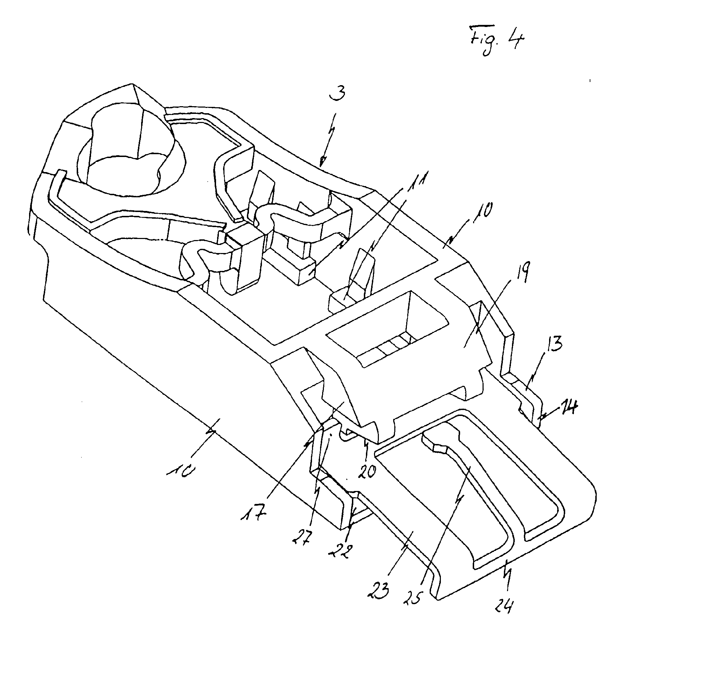

Die Funktionsweise sowie das Zusammenwirken des Riegels 3 und der Blattfeder 4 soll nachstehend anhand der Fig. 1 und 4 näher beschrieben werden:

Gemäß der Fig. 1 hat das Gehäuse 1 im Bereich des Montageabschnitts 2 eine quer verlaufende Aufnahmenut 28a, in welche die Halte- bzw. Befestigungsleiste 24 der Blattfeder 4 eingesetzt ist, derart, daß sich die Blattfeder 4 bzw. der Blattfederrahmen 23 im Bereich eines vorbestimmten Winkels bezüglich des Führungsabschnitts 7 des Riegels 3 in der Aufnahmenut 28a verschwenken läßt. Zusätzlich befinden sich im Montageabschnitt 2 zwei noppenförmige Vorsprünge 29, die sich in eine vom Blattfederrahmen 23 umschlossene Öffnung erstrecken und somit den Blattfederrahmen 23 positionieren und ausrichten.

Für ein Montieren des Gehäuses 1 an einer Hutschiene, wird der Riegel 3 aus seiner Rastposition gemäß der Fig. 1 in seine Freigabeposition zurückgezogen, in der die Noppen 19a an der gehäuseseitigen Auswölbung anschlagen und somit die Rückziehbewegung begrenzen. In dieser Position ergibt sich zwischen dem nasenförmigen Vorsprung 17 des Riegels 3 und der nicht gezeigten klauenförmigen Haltung am Gehäuse 1 ein Spalt, der ein Einsetzen der Hutschiene in die klauenförmige Halterung und ein Anlegen des Gehäuses 1 mit dessen Anlagefläche 5 an die Hutschiene ermöglicht.

Sobald das Gehäuse 1 mit dessen Anlagefläche 5 an der Hutschiene anliegt, wird der Riegel 3 aus seiner Freigabeposition in Richtung seiner Rastposition verschoben. Bei dieser Verschiebebewegung übergleitet der Gleitzapfen 8a des Riegels 3 die Auswölbung des Gehäuses 1 im Bereich des Führungsabschnitts 7, wobei anfänglich eine aus der Deformation der Platte 8 und des Stegs 8 resultierende Kraft entgegen der Schiebebewegung des Riegels 3 überwunden werden muß. Sobald der Gleitzapfen 8a den Scheitelpunkt der gehäuseseitigen Auswölbung überschritten hat, dreht sich die Richtung der resultierenden Federkraft in die Schieberichtung des Riegels 3 um und bewegt diesen schnappartig in seine Rastposition. In dieser letztgenannten Bewegungsphase untergreifen die Flankenwandfortsätze 13 des Riegels 3 im Bereich deren Rampen 22 das freie Ende der Blattfeder 4 unterhalb ihrer Klemmkanten 27 und heben die Blattfeder 4 entsprechend dem Winkel der Rampen 22 allmählich an.

Bei der Anhebebewegung der Blattfeder 4 wird zuerst die Federzunge 25 gegen die Hutschiene gepreßt, welche somit eine Rückstellfederkraft auf den Blattfederrahmen 23 ausübt. Gleichzeitig übergreift der nasenförmige Vorsprung 17 des Riegels 3 die Hinterseite der Hutschiene, wobei die Hutschiene durch die Federkraft der Federzunge 25 gegen die Anlageflächen 20 des Vorsprungs 17 gedrückt wird, d.h. die Hutschiene wird quasi zwischen dem Vorsprung 17 des Riegels 3 und der Federzunge 25 eingespannt.

Bei weiterem Verschieben des Riegels 3 kommen die in Richtung Hutschiene sich bewegenden Klemmkanten 27 mit einer unteren Längskante der Hutschiene in Eingriff und ziehen so das Gehäuse 1 nach unten, wobei die obere Längskante der Hutschiene in die klauenförmige Halterung des Gehäuses 1 einrastet. Die Verschiebebewegung des Riegels 3 in seine Rastposition wird durch das Anschlagen der Anschlagflächen 14 gegen den Absatz 6 begrenzt, wobei in dieser Rastposition der noch immer im Bereich der gehäuseseitigen Auswölbung befindliche Gleitzapfen 8a durch die elastische Deformation der Platte 9 und des Stegs 8 eine Kraft in Schieberichtung auf den Riegel 3 ausübt und diesen somit in der Rastposition arretiert.

Gleichzeitig verhindern zwei Anschlagklötze 30, welche einstückig am Gehäuse 1 ausgebildet sind und sich parallel zu dem Blattfederrahmen 23 erstrecken, ein weiteres Verschwenken des Blattfederrahmens 23 um die Halteleiste 24.

Gemäß vorstehender Beschreibung gleicht somit die Blattfeder 4 Spiel zwischen dem Gehäuse 1 und der Hutschiene aufgrund der gleitenden Anordnung des Riegels 3 aus, indem in Rastposition des Riegels 3 gemäß der Fig. 1 die Blattfeder 4 durch die Rampen 22 zur Hutschiene angehoben wird, solange, bis die Klemmkanten 27 gegen die Unterkante der Hutschiene gedrückt werden und die Hutschiene zwischen sich und der gehäuseseitigen klauenförmigen Halterung einspannen. Die Klemmkraft wird somit über die Klemmkanten 27, den Blattfederrahmen 23 und die Halteleiste 24 der Blattfeder 4 in die Nut 28a des Gehäuses 1 eingeleitet, wobei der Kraftschluß zwischen der Blattfeder 4 und der Hutschiene aufgrund der exakten Halterung der Blattfeder 4 in der Nut 28a und der Federvorspannung durch den Riegel 3 im wesentlichen spielfrei ist. Da ferner äußere Kräfte auf das Gehäuse 1, beispielsweise ein geringes Verdrehen oder Kippen des Gehäuses 1 von der klauenförmigen Halterung des Gehäuses 1 und den Klemmkanten 27 der Blattfeder 4 aufgenommen und über den Blattfederrahmen 23 direkt in die Nut 28a des Gehäuses 1 eingeleitet werden, bleibt der Riegel 3 von diesen äußeren Kräften unbeaufschlagt und kann so seine Rastposition sicher beibehalten.

## Patentansprüche

1. Installationsgerät zur Montage an einer Hutschiene mit einem Gehäuse (1), dessen eine Seite zu einem Montageabschnitt (2) ausgebildet ist, in dem ein verschiebbar am Gehäuse (1) gelagerter Riegel (3) vorgesehen ist, der zumindest einen in Schieberichtung sich erstreckenden Vorsprung (17) hat, der in einer Raststellung in hinterschneidenden Eingriff mit der Hutschiene bringbar ist,
**gekennzeichnet durch**
ein laschenförmiges Klemmelement (4), das am Gehäuse (1) derart gehalten ist, daß es vom Riegel (3) bei seiner Verschiebung in die Raststellung zumindest teilweise untergreifbar und hierdurch in eine die Hutschiene festklemmende Position bewegbar ist.

2. Installationsgerät nach Anspruch 1, **dadurch gekennzeichnet, daß**
das Klemmelement (4) eine Blattfeder ist.

3. Installationsgerät nach Anspruch 2, **dadurch gekennzeichnet, daß**
die Blattfeder (4) aus einem im wesentlichen rechteckigen Blattfederrahmen (23) besteht, der an einer schmalen Seite in einem rechten Winkel unter Ausbildung einer Halteleiste (24) und an der gegenüberliegenden schmalen Seite ebenfalls in einem rechten Winkel jedoch entgegengesetzt zur Halteleiste (24) unter Ausbildung zumindest einer Klemmkante (27) abgebogen ist.

4. Installationsgerät nach Anspruch 3, **dadurch gekennzeichnet, daß**
zwei Klemmkanten (27) in den Eckbereichen der schmalen Seite vorgesehen sind, die zwischen sich einen kerbenförmigen Freiraum ausbilden, in welchen eine einstückig mit dem Blattfederrahmen (23) ausgebildete Gleitnase (28) vorragt.

5. Installationsgerät nach einem der Ansprüche 3 und 4,
**gekennzeichnet durch**
eine Federzunge (25), die sich von der die Halteleiste (24) ausbildenden schmalen Seite des Blattfederrahmens (23) in Richtung zur gegenüberliegenden schmalen Seite erstreckt und dabei in einem bezüglich einer vom Blattfederrahmen (23) aufgespannten Ebene spitzen Winkel ausgerichtet ist.

6. Installationsgerät nach Anspruch 5, **dadurch gekennzeichnet, daß**
die Federzunge (25) eine in Konstruktionslage im wesentlichen parallel zur Ebene ausgerichtete Anlagefläche (26) hat.

7. Installationsgerät nach einem der Ansprüche 3 bis 6, **dadurch**
**gekennzeichnet, daß**
der Riegel (3) an einer, in Schieberichtung gesehen, vorderen, den Vorsprung (17) aufweisenden Seite zumindest einen Fortsatz (13) hat, der eine in Schieberichtung sich keilförmig verjüngende Rampe (22) ausbildet, welche sich beim Verschieben des Riegels (3) in Rastposition unter die Blattfeder (4) im Bereich deren Klemmkanten (27) schiebt und die Blattfeder (4) in Form einer Schwenkbewegung um die Halteleiste (24) anhebt, bis die Klemmkanten (27) an der Hutschiene anliegen.

## Claims

1. Installation device for mounting on a top hat rail with a housing (1), one side of which is formed as a mounting section (2) in which a locking bar (3) mounted slidingly on the housing (1) is provided which has at least one projection (17) extending in the direction of sliding which, when snapped into position, can be brought into interlocking engagement with the top hat rail,
**characterised by**
a plate-formed clamping element (4) which is held on the housing (1) in such a way that it can be at least partially gripped from below by the locking bar (3) as it is pushed into its locking position and can thus be moved into a position clamping the top hat rail into place.

2. Installation device in accordance with claim 1, **characterised in that**
the clamping element (4) is a leaf spring.

3. Installation device in accordance with claim 2, **characterised in that**
the leaf spring (4) consists of a substantially rectangular leaf spring frame (23) which is bent at a right angle on one narrow side forming a holding strip (24) and which on the opposite narrow side is also bent at a right angle, but in the opposite direction to the holding strip (24), forming at least one clamping edge (27).

4. Installation device in accordance with claim 3, **characterised in that**
two clamping edges (27) are provided in the corner areas of the narrow side which form between them a notch-formed space into which a sliding lug (28) formed integrally with the leaf spring frame (23) projects.

5. Installation device in accordance with one of claims 3 and 4, **characterised by**
a flexible tongue (25) which extends from the narrow side of the leaf spring frame (23) which forms the holding strip (24) in the direction of the opposite narrow side and is thereby aligned at an acute angle relative to the plane enclosed by the leaf spring frame (23).

6. Installation device in accordance with claim 5, **characterised in that**
the flexible tongue (25) has a contact surface (26) which, in its installed position, is aligned substantially parallel to the plane.

7. Installation device in accordance with one of claims 3 to 6, **characterised in that**
the locking bar (3) has at least one extension (13) on a front side, viewed in the direction of sliding, possessing the projection (17), which forms a ramp (22) narrowing in a wedge-like manner in the direction of sliding which, when the locking bar (3) is pushed into its locking position beneath the leaf spring (4) slides into the area of its clamping edges (27) and raises the leaf spring (4) in the form of a pivoting movement around the holding strip (24) until the clamping edges (27) comes to rest against the top hat rail.

## Revendications

1. Appareil d'installation à monter sur un profilé chapeau, comprenant un boîtier (1) dont un côté est conformé en portion de montage (2) dans laquelle est prévu un verrou (3) qui est monté à coulissement sur le boîtier (1) et qui comporte au moins une saillie (17), laquelle s'étend dans la direction de coulissement et peut, dans une position encliquetée, être amenée en prise par contre-dépouille avec le profilé chapeau, **caractérisé par** un élément de serrage formant patte (4), lequel est maintenu contre le boîtier (1) de façon à pouvoir être saisi au moins partiellement par-dessous par le verrou (3) lors du déplacement de celui-ci vers la position encliquetée et à pouvoir ainsi être amené dans une position de blocage du profilé chapeau.

2. Appareil d'installation selon la revendication 1,
**caractérisé en ce que** l'élément de serrage (4) est un ressort à lame.

3. Appareil d'installation selon la revendication 2,
**caractérisé en ce que** le ressort à lame (4) est constitué d'un cadre de ressort à lame sensiblement rectangulaire (23) qui, sur un petit côté, est replié à angle droit en formant une barrette de retenue (24) et, sur le petit côté opposé, est également replié à angle droit, mais à l'opposé de la barrette de retenue (24), en formant au moins un bord de serrage (27).

4. Appareil d'installation selon la revendication 3,
**caractérisé en ce que** dans les zones de coin du petit côté sont prévus deux bords de serrage (27) qui forment entre eux un espace libre en forme d'encoche dans lequel fait saillie un talon glissant (28) réalisé d'un seul tenant avec le cadre de ressort à lame (23).

5. Appareil d'installation selon une des revendications 3 et 4, **caractérisé par** une languette élastique (25) qui, à partir du petit côté du cadre de ressort à lame (23) conformé en barrette de retenue (24), s'étend en direction du petit côté opposé en étant orientée selon un angle aigu par rapport à un plan défini par le cadre de ressort à lame (23).

6. Appareil d'installation selon la revendication 5,
**caractérisé en ce que** la languette élastique (25) possède une surface d'appui (26) qui, en position initiale, est orientée sensiblement parallèlement au plan.

7. Appareil d'installation selon une des revendications 3 à 6, **caractérisé en ce que** le verrou (3) possède, sur un côté qui est situé à l'avant par rapport à la direction de coulissement et qui comporte la saillie (17), un prolongement (13) formant une rampe (22) qui se rétrécit en forme de coin dans la direction de coulissement et qui, lors du déplacement du verrou (3) en position encliquetée, se glisse sous le ressort à lame (4) dans la zone des bords de serrage (27) de celui-ci et soulève le ressort à lame (4) en le faisant pivoter autour de la barrette de retenue (24) jusqu'à ce que les bords de serrage (27) soient appliqués contre le profilé chapeau.
